# EUROPÄISCHE PATENTSCHRIFT

(11) **EP 4 050 228 B1**
(45) Veröffentlichungstag und Bekanntmachung des Hinweises auf die Patenterteilung: **31.05.2023**
(21) Anmeldenummer: 21159605.1
(22) Anmeldetag: 26.02.2021
(51) Int. Cl.: F16C 17/02, F16C 33/14, B33Y 10/00, B33Y 80/00, F16F 7/01, B32B 15/01

(54) **LAGERBUCHSE FÜR EINE ROTIERENDE WELLE, LAGERSCHILD, ELEKTROMOTOR UND VERFAHREN ZUR HERSTELLUNG EINES DÄMPFUNGSELEMENTES**
BEARING BUSH FOR A ROTATING SHAFT, BEARING PLATE, ELECTRIC MOTOR AND METHOD FOR MANUFACTURING A DAMPING ELEMENT
COUSSINET DE PALIER POUR UN ARBRE ROTATIF, FLASQUE, MOTEUR ÉLECTRIQUE ET PROCÉDÉ DE FABRICATION D'UN ÉLÉMENT D'AMORTISSEMENT

(43) Veröffentlichungstag der Anmeldung: 31.08.2022
(73) Patentinhaber: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)
(74) Vertreter: Siemens Patent Attorneys

(56) Entgegenhaltungen:
- DE-A1-102010 063 725
- JP-A- 2019 015 369
- US-A1- 2004 170 459
- US-A1- 2017 002 858

## Beschreibung

Die Erfindung betrifft eine Lagerbuchse nach Patentanspruch 1, ein Lagerschild nach Patentanspruch 10, einen Elektromotor nach Patenanspruch 11 sowie ein Verfahren zur Herstellung eines Dämpfungselementes nach Patentanspruch 12.

Bei rotierenden Maschinen weisen die Rotoren eine dynamisch sich ändernde Relativbewegung in radialer und auch in axialer Richtung in Bezug auf die quasi ruhenden Statoren bzw. auf ein Gehäuse auf. Dabei betrifft diese Problematik grundsätzlich sowohl elektrische Motoren als auch Verbrennungsmotoren. Bei elektrischen Motoren ist dabei insbesondere das Lagerschild betroffen, das eine Lagerbuchse aufweist, die als Dämpfungselement dient. Bei Verbrennungsmotoren betrifft diese Problematik die Lagerung der Nockenwelle sowie die Lagerung der Kurbelwelle. Im Weiteren wird hier exemplarisch die Problematik im Hinblick auf Elektromotoren beschrieben.

Die genannten Relativbewegungen können sowohl entlang der Rotorachse als auch auf dem Rotoraußenumfang unterschiedlich und sich dynamisch ändernd ausgebildet sein. De facto ändert sich somit dynamisch das jeweilige lokale Spaltmaß zwischen Rotor und Stator in jedem Ortspunkt auf der Rotoroberfläche.

Die Rotoren selbst bewegen sich dabei dynamisch mit unterschiedlichen Resonanzmoden, welche im Wesentlichen durch die erzeugten elektromagnetischen Kräfte, die mechanischen Fliehkräfte (z. B. Unwuchten) und die dynamischen Steifigkeiten von Rotor, Rotorlagerung im Gehäuse, dem Gehäuse selbst sowie der Lagerung des Gehäuses hervorgerufen und beeinflusst werden. Eine Rolle kann bei Elektromotoren auch das im Rotorspalt befindliche Medium spielen, das eine Dämpfung hervorruft, insbesondere, wenn es sich bei dem Medium nicht um ein Gas, sondern um ein Fluid wie z. B. Wasser oder ein Silikonöl handelt. Die mechanische Wirkungskette kann dabei als Reihenschaltung folgender Elemente beschrieben werden:
- Zum einen die geometrischen Toleranzen des Aufbaus von Rotor, des Lagers und des Stators bzw. des Gehäuses. Hier spielen beispielsweise Unwuchten, Lagerspiel oder radial unterschiedliche thermische Ausdehnungskoeffizienten bzw. Exzentritäten und/oder Steifigkeitsunterschiede eine Rolle. Ferner treten in radialer Richtung unterschiedliche elektromagnetische Felder und Induktivitäten auf. Dies wird durch Materialunterschiede, Fluktuationen im elektrischen Erregungsstrom und den induzierten Wirbelströmen hervorgerufen. Des Weiteren spielen in der genannten Wirkungskette unterschiedliche lokale Erwärmungen des Gesamtaufbaus im Betrieb eine Rolle, die dazu führen, dass resonante dynamische Eigenschwingungen der Rotorachse für jeden spezifischen Ansteuerungs- und Lastfall entstehen.

Die so erzeugten dynamischen Relativbewegungen der Rotorachse wirken entweder direkt oder indirekt auf den sogenannten Lageraußenring.

Aufgrund der so beschriebenen mechanischen Wirkungskette kommt es bei einer angeregten resonanten Eigenschwingung der Rotorachse zu einer hochdynamischen Anregung und Weiterleitung von mechanischen Stoßereignissen mit Relativbewegungen im Bereich weniger µm innerhalb des Lagers und der Lagerbuchse, bis in das Lagerschild hinein. Dies wird gemeinhin als dynamisches Lagerspiel bezeichnet. Über diese Stoßereignisse werden wiederum mechanische Schwingungen im Gehäuse und Gehäuselager angeregt, welche sich dann als Vibrationen, die sich als Körperschall auswirken, als auch durch akustische Phänomene bemerkbar machen.

Um Motorengeräusche und Schwingungen zu reduzieren, werden nach dem Stand der Technik folgende Maßnahmen umgesetzt, welche aber im Allgemeinen die Lagersteifigkeit signifikant reduzieren und damit höhere relative Spaltmaße bedingen können: Zum einen das Anbringen träger Massen und ggf. das Überdimensionieren von mechanischen Komponenten zur Verschiebung der Resonanzfrequenzen in unkritische Bereiche, insbesondere weit entfernt vom Bereich der Anwendungsdrehzahlen. Des Weiteren ist der Einbau von Gummi-O-Ringen in den Lagersitz der Rotoren ein probates Mittel. Zudem werden gelegentlich Magnetlager für die Rotoren verwendet. Aber wie bereits dargelegt, führen all diese Maßnahmen zu höheren Spaltmaßen im Motor. US 2017/002858 A1 zeigt eine dünnwandige Lagerbuchse, jedoch ohne Dämpfungsfunktion. WO 2012/084688 A1 zeigt ein Verfahren zur Herstellung eines Dämpfungselementes mittels eines additiven Fertigungsverfahrens.

Die Aufgabe der Erfindung besteht darin, eine Verbesserung der Dämpfung der entstandenen Rotorschwingungen im Lager und bzw. auch oder in der Lagerbuchse und im Lagerschild unter gleichzeitigem Erhalt oder sogar Erhöhung der Lagersteifigkeit in radialer und axialer Richtung zu gewährleisten. Ferner steht eine Reduzierung der mechanischen Schwingungen und der Geräuschentwicklung am Motor im Vordergrund.

Die Lösung der Aufgabe besteht in einer Lagerbuchse für eine rotierende Welle nach Patentanspruch 1, in einem Lagerschild nach Patentanspruch 10, einem Elektromotor mit einem Lagerschild nach Patentanspruch 11 sowie in einem Verfahren zur Herstellung eines Dämpfungselementes nach Patentanspruch 12.

Die Lagerbuchse für eine rotierende Welle nach Patentanspruch 1 umfasst eine Wand, die eine Wandstärke aufweist, die weniger als 10 % des Durchmessers der Lagerbuchse beträgt. Die Lagerbuchse zeichnet sich dadurch aus, dass sie in axialer Richtung aus einer Mehrzahl von stoffschlüssig verbundenen Schichten aufgebaut ist. Diese Schichten weisen jeweils eine Schichtdicke auf, die zwischen 80 µm und 300 µm liegt. Ferner weist die Wand geschlossene Kavitäten auf, die mit einem Pulver gefüllt sind.

Die beschriebene Lagerbuchse weist somit eine, bezogen auf den Gesamtdurchmesser der Lagerbuchse, sehr dünne Wand auf, die über diskrete stoffschlüssige Schichten aufgebaut ist. Diese stoffschlüssigen Schichten lassen sich durch ein additive Fertigungsverfahren, insbesondere durch ein Siebdruckverfahren in der beschriebenen Schichtdicke aufbauen. Das Siebdruckverfahren ist dazu geeignet, als additives Herstellungsverfahren Kavitäten mit einer Pulverfüllung in einer sehr schmalen Wand zu realisieren. Diese Pulverfüllung in den geschlossenen Kavitäten bewirkt dabei ein ausgesprochen starkes Dämpfungsverhalten, was wiederum dazu dient, die beschriebenen Vibrationen und die dabei erzeugten akustischen Phänomene sowie den Körperschall des Bauteils zu reduzieren. Die Reduktion erfolgt dabei ohne Maßnahmen, die zu einem höheren Spaltmaß führen, wie die z. B. im Stand der Technik beschriebenen O-Ring-Dichtungen. Dabei handelt es sich bei der beschriebenen Lagerbuchse generell um ein Dämpfungselement, das grundsätzlich auch an anderen vibrationsbelasteten Stellen in mechanisch wirkenden Vorrichtungen eingesetzt werden kann. Besonders zweckmäßig ist die Anordnung der beschriebenen Lagerbuchse in einem Lagerschild, das als Abdeckschild eines Gehäuses eines Elektromotors dient. Hierbei wird durch das Lagerschild und durch die Lagerbuchse die Welle eines Rotors in das Motorengehäuse geführt. Insofern ist auch der Elektromotor, der das Lagerschild mit der beschriebenen Lagerbuchse umfasst, Teil der Erfindung.

In einer weiteren Ausgestaltungsform der Erfindung weist die Lagerbuchse Kavitäten auf, die einen maximalen Querschnitt aufweisen, der kleiner als 5 mm², insbesondere kleiner als 3 mm² ist. Dabei wird unter dem Begriff des maximalen Querschnitts der Schnitt durch eine Kavität in einem Schnittbild verstanden, der die maximale mögliche Größe aufweist. In der Regel wird angestrebt, den maximalen Querschnitt auch noch kleiner als 3 mm² auszugestalten, wobei ein definierter Querschnitt durch eine Kavität mit noch kleinerem Querschnitt komplexer in der Herstellung ist.

Ein geometrisch bemessene Pulverfüllgrad der Kavität beträgt dabei mindestens 60 %, bevorzugt mindestens 80 %, ganz besonders bevorzugt 90 %. Es ist anzustreben, den Füllgrad so hoch wie möglich auszugestalten, was herstellungsbedingt jeweils eine technische Herausforderung bedeutet. Auf die technische Realisierung des Füllgrades bzw. des Füllens der Kavitäten mit Pulver wird bei der Beschreibung des Verfahrens noch näher eingegangen. Es wird unter dem geometrisch bemessenen Füllgrad dabei der Grad der Füllung der Kavität verstanden, der die Füllung durch eine Pulverschüttung bewirkt. Dass zwischen den einzelnen Partikeln der Pulverfüllung wiederum ein geringer Hohlraum jeweils in der Größenordnung von Partikeln liegt, bleibt bei der Angabe des Füllgrad unberücksichtigt.

Als bevorzugtes Material der Lagerbuchse bzw. der Lagerbuchsenwand wird eine Metalllegierung, insbesondere eine Metalllegierung auf Eisenbasis oder eine, Eisen umfassende Legierung herangezogen. Eine derartige Legierung lässt sich zum einen in praktischer Weise durch das bereits beschriebene nützliche Siebdruckverfahren oder durch ein anderes additives Herstellungsverfahren herstellen und durch einen Wärmebehandlungsprozess in Form eines Sinterprozesses in geeigneter Form verfestigen.

Das Pulver, das in den Kavitäten angeordnet ist, umfasst dabei wiederum ein Material, das einen höheren Schmelzpunkt aufweist als das Material der Wandstruktur. Wenn die Wandstruktur wie bereits beschrieben beispielsweise aus einem Metall auf Eisenbasis besteht, so ist es zweckmäßig, das Pulver beispielsweise auf Wolframbasis zu gestalten. Dies hat bei der Herstellung den Vorteil, dass die Wandstruktur der Lagerbuchse durch einen Sinterprozess oder einen anderen entsprechenden Wärmebehandlungsprozess dargestellt werden kann, während im Inneren der Kavitäten das dort eingebrachte Material nicht verschmilzt und nicht versintert. Am Beispiel des Wolframs wird auch noch deutlich, dass in einer weiteren vorteilhaften Ausgestaltungsform das Pulver in den Kavitäten auch eine höhere Dichte aufweist als das Material der Wandstruktur. Dies bewirkt noch höhere Dämpfungseigenschaften als ein Material mit geringerer Dichte.

Ein weiterer Bestandteil der Erfindung ist ein Verfahren zur Herstellung eines Dämpfungselementes, wie beispielsweise die beschriebene Lagerbuchse. Hierbei werden bevorzugt mittels eines Siebdruckverfahrens folgende Schritte durchgeführt:
Zunächst wird ein erster Teilbereich einer ersten Schicht mit einer ersten Siebdruckpaste gedruckt. Im Weiteren wird ein zweiter Teilbereich der ersten Schicht mit einer zweiten Siebdruckpaste gedruckt. Dabei ist der zweite Teilbereich derart ausgestaltet, dass er in der jeweiligen Schichtebene vom ersten Teilbereich umschlossen wird. Dies führt bei Aufbau von mehreren übereinander folgenden Schichten zu - mit der zweiten Siebdruckpaste gefüllten - Volumenbereichen (Volumina). Im Weiteren folgt ein Trockenschritt der ersten Schicht, wobei dieser Trockenschritt auch auf zwei Teilschritte aufgeteilt sein kann, wobei zunächst nach dem Druck des ersten Teilbereichs ein Trockenschritt erfolgt und nach dem Druck des zweiten Teilbereichs ein weiterer Trocknungsschritt.

Dieser beschriebene Druckprozess eines ersten und des zweiten Teilbereichs wird sukzessive fortgeführt und dabei weitere Schichten erzeugt, bis zur Ausbildung eines dreidimensionalen Grünkörpers. In diesem Grünkörper bilden -wie erwähnt- die zweiten Teilbereiche der Schichten ein von den ersten Teilbereichen umschlossenes Volumen aus. Im Weiteren wird ein Wärmebehandlungsprozess durchgeführt, der eine Prozesstemperatur aufweist, die einen Sintervorgang eines Materials der ersten Siebdruckpaste bewirkt und bei der bei dem Material der zweiten Siebdruckpaste der Sintervorgang bei der Prozesstemperatur im Wesentlichen ausbleibt.

Wie bereits bezüglich Patentanspruch 1 beschrieben, wird durch das Verfahren eine Vielzahl von Volumina erzeugt, die in dem Grünkörper von einem Material der ersten Bereiche umschlossen sind. Dieses Material der ersten Bereiche, das beispielsweise auf Eisenbasis aufgebaut ist, umschließt die Volumina, indem das Material der zweiten Bereiche vorliegt, beispielsweise eine Wolframlegierung. Durch den beschriebenen Wärmebehandlungsprozess bzw. Sinterprozess sintert dabei das Material der ersten Bereiche, also beispielsweise eine Eisenlegierung, zu einer selbsttragenden Struktur, einer Wandstruktur des Dämpfungselementes, beispielsweise der Lagerbuchse. Das Material der zweiten Bereiche, die die beschriebenen Volumina bilden, sintert bei der beschriebenen Prozesstemperatur nicht oder nur in geringem Maße. Bei einer starken Bewegung des Dämpfungselementes zerfällt das Material der zweiten Bereiche zu einem Pulver. Nach dem Wärmebehandlungsprozess bilden die Volumina des Grünkörpers die die mit Pulver gefüllten Kavitäten des Dämpfungselementes (insbesondere der Lagerbuchse). Dieses Pulver in den Kavitäten wirkt ausgesprochen dämpfend für stark vibrationsbelastete Bauteile.

Grundsätzlich kann nach der Herstellung des Grünkörpers mittels des beschriebenen Siebdruckverfahrens, vor dem beschriebenen Wärmebehandlungsprozess (Sinterprozess) ein Entbinderungsprozess eingelagert werden, der bevorzugt in der Regel ebenfalls ein thermischer Prozess ist. Hierbei werden Bindemittel der Siebdruckpasten beispielsweise durch thermische Zersetzung ausgebrannt. Die Temperaturen beim Wärmebehandlungsprozess zur Entbinderung liegen in der Regel unter den Temperaturen zur Wärmebehandlung für den Sintervorgang. Der Entbinderungs- bzw. Sinterprozess ist dabei so zu führen, dass sämtliche bis zur maximalen Sintertemperatur flüchtigen Bestandteile der zweiten Siebdruckpaste bis zum Zeitpunkt der Ausbildung von nicht mehr für Gase durchlässige Wandbereiche des ersten Materials vollständig entfernt wurden.

Weitere Merkmale der Erfindung und weitere Bestandteile der Erfindung werden anhand der folgenden Figuren näher erläutert. Dabei handelt es sich um rein exemplarische Ausgestaltungsformen der Erfindung, die keine Einschränkung des Schutzbereiches darstellen.

Dabei zeigen:
- Figur 1: eine dreidimensionale Explosionsdarstellung eines Elektromotors mit einem Lagerschild,
- Figur 2: eine dreidimensionale Darstellung eines Lagerschildes mit einer Lagerbuchse,
- Figur 3: eine dreidimensionale Darstellung eines Dämpfungselementes in Form einer Lagerbuchse in einem Schichtaufbau,
- Figur 4: einen Schnitt durch eine Lagerbuchsenwand anhand des Schnittes IV in Figur 3,
- Figur 5: einen Querschnitt durch den Ausschnitt V in Figur 3 an der äußeren Oberfläche der Lagerbuchse nach Figur 3,
- Figur 6: einen inneren Querschnitt entlang des Schnittes VI in Figur 3,
- Figur 7: eine schematische Darstellung eines Siebdruckvorganges,
- Figur 8: einen schichtförmigen Aufbau eines Grünkörpers als Vorstufe des Dämpfungselementes gemäß Figur 3,
- Figur 9: einen Entbinderungsprozess des Grünkörpers,
- Figur 10: einen Wärmebehandlungsprozess in Form eines Sinterprozesses des Grünkörpers,
- Figur 11: einen Querschnitt durch den Schnitt XI in Figur 8 und
- Figur 12: einen Querschnitt entlang des Schnittes XII in Figur 8.

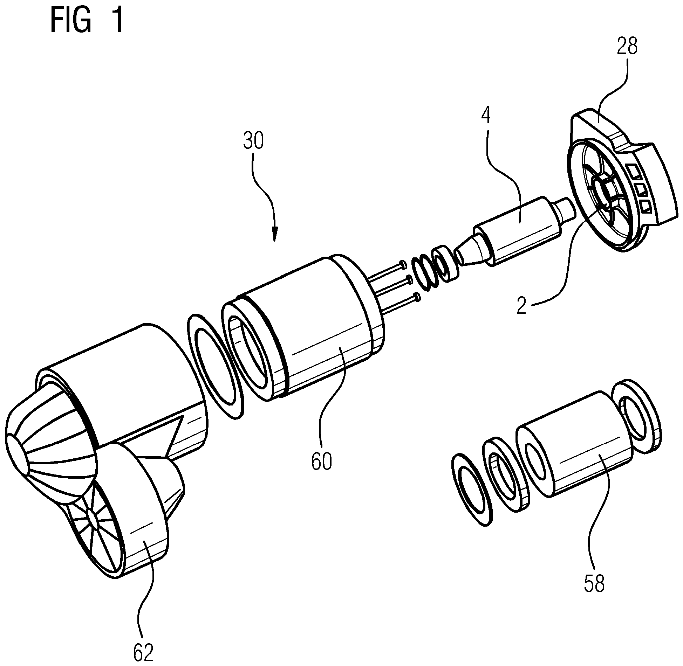

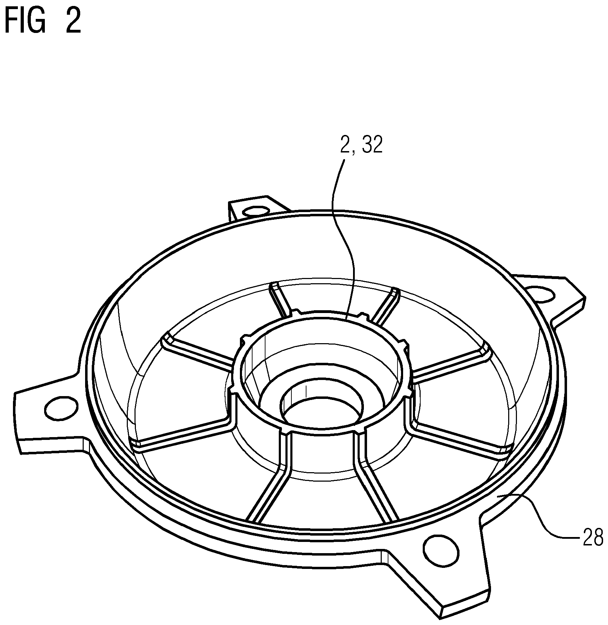

In Figur 1 ist eine Übersichtsdarstellung eines Elektromotors 30 gegeben. Dieser Elektromotor 30 ist in Form einer dreidimensionalen Explosionsdarstellung abgebildet. Er umfasst dabei ein Lagerschild 28, eine rotierende Welle 4, einen Stator 60 sowie einen auf der rotierenden Welle 4 angeordneten Rotor 58. Stator 58, Rotor 60 und Welle 4 sind in einem Gehäuse 62 gelagert, wobei das Lagerschild 28 zur Abdeckung des Gehäuses 62 dient und dabei die Welle 4 durch das Lagerschild 28 nach außen geführt ist. Hierfür ist in das Lagerschild 28 eine Lagerbuchse 2 eingebracht, in der noch im Weiteren ein hier nicht dargestelltes Lager, beispielsweise ein Kugellager, angebracht ist. Eine genauere Darstellung des Lagerschildes 28 ist in Figur 2 gegeben. Die Lagerbuchse 2 kann auch als Dämpfungselement 32 im Allgemeineren bezeichnet werden.

Wie bereits beschrieben, treten bei elektrischen Maschinen wie dem in Figur 1 dargestellten Elektromotor 30 bei den Rotoren 58 im Allgemeinen sich dynamisch ändernde Relativbewegungen in eine radiale oder auch in eine axiale Richtung in Bezug auf die quasi ruhenden Statoren, hier als Stator 60 dargestellt, und bezüglich des Gehäuses 62 auf. Die daraus resultierenden Resonanzen wirken im Weiteren über die Achse 4 auf die Lagerbuchse 2 des hier nicht dargestellten Lagers. Die Lagerbuchse 2 ist dabei in der Regel in das Lagerschild 28 eingegossen. Das Lagerschild 28 wiederum ist in sehr vielen Fällen aus einem Aluminiumguss ausgestaltet, was dazu führt, dass dieses zwar eine geringe Dichte hat, dabei aber auch eine geringe Dämpfung und eine relativ geringe Steifigkeit aufweist. Auf diese Art und Weise kommt es häufig zu resonanten Eigenschwingungen der Welle 4 und des Rotors 58 und dabei zu einer hoch dynamischen Anregung und Weiterleitung von mechanischen Stoßereignissen mit Relativbewegungen im Bereich von wenigen µm innerhalb des Lagers und der das Lager umgebenden Lagerbuchse 2. Diese Relativbewegungen werden wiederum in Form von mechanischen Schwingungen in das Gehäuse 62 weitergeleitet, wobei es zu Vibrationen und akustischen Phänomenen, also zu einer erheblichen Geräuschentwicklung kommen kann. Vor dem Hintergrund dieser Problemstellung wird im Folgenden beschrieben, wie die Lagerbuchse 2 in Form eines Dämpfungselementes 32 ausgestaltet sein kann, damit die beschriebenen Schwingungen nicht in dem Maße in das Lagerschild 28 und im Weiteren in das Gehäuse 62 weitergeleitet werden. Dies wiederum führt dazu, dass Vibrationen und unerwünschte akustische Phänomene am Elektromotor 30 reduziert bzw. unterbunden werden können.

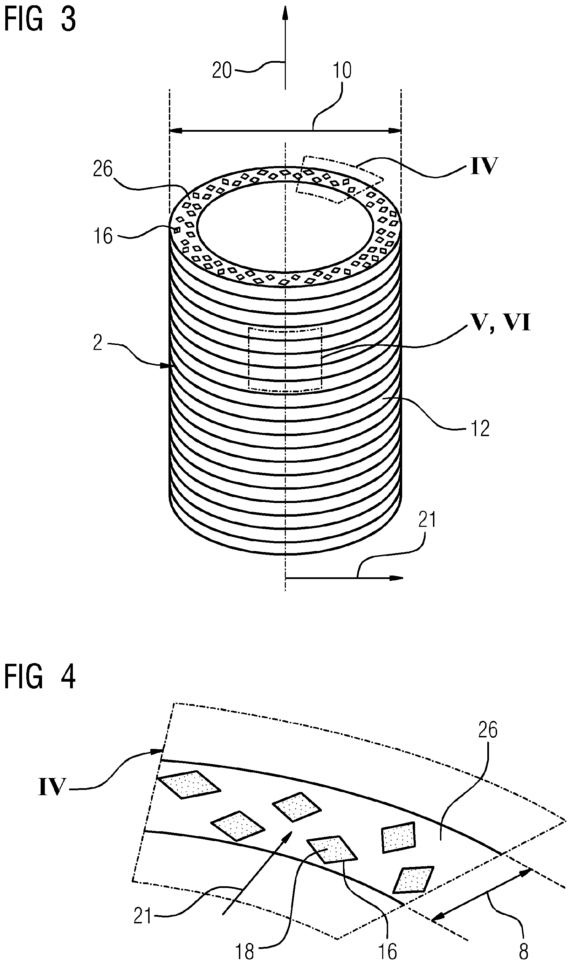

Hierzu ist die Lagerbuchse 2, wie in Figur 3 dargestellt, schichtförmig ausgestaltet, wobei eine Mehrzahl von Schichten 12 mit einer Schichtdicke zwischen 10pm und 200 µm so aufeinandergesetzt sind, dass sich die Buchse 2 ergibt. Die Buchse 2 weist dabei eine Wandstärke auf, die weniger als 10 % des Durchmessers 10 der Lagerbuchse 2 beträgt. D. h., die Wandstärke 8 ist in Bezug auf den Durchmesser 10 relativ schmal. Bei einem üblichen Durchmesser einer Lagerbuchse 2 von 40 - 70 mm beträgt die Wandstärke in der Regel zwischen 4 und 7 mm und kann dabei auch noch geringer sein. Wandstärken von 2 mm sind ebenfalls üblich. Dabei weist eine Wandstruktur 26 der Lagerbuchse 2 Kavitäten 16 auf, die mit einem Pulver 18 gefüllt sind.

In Figur 4 ist ein Schnitt entlang der durch die mit IV in Figur 3 beschriebenen Linien dargestellt. Hierbei sind die Kavitäten 16 rautenförmig ausgebildet, was rein exemplarisch ist. Die Kavitäten 16 können auch in Form von Bienenwaben, also sechseckig, rund, oder auch unregelmäßig dargestellt sein. Das darin befindliche Pulver 18 dient dabei als Dämpfungsmittel, das dazu führt, dass Vibrationen, die auf die Lagerbuchse 2 übertragen werden, in der Wandstruktur 26 mit den Kavitäten 16 absorbiert werden.

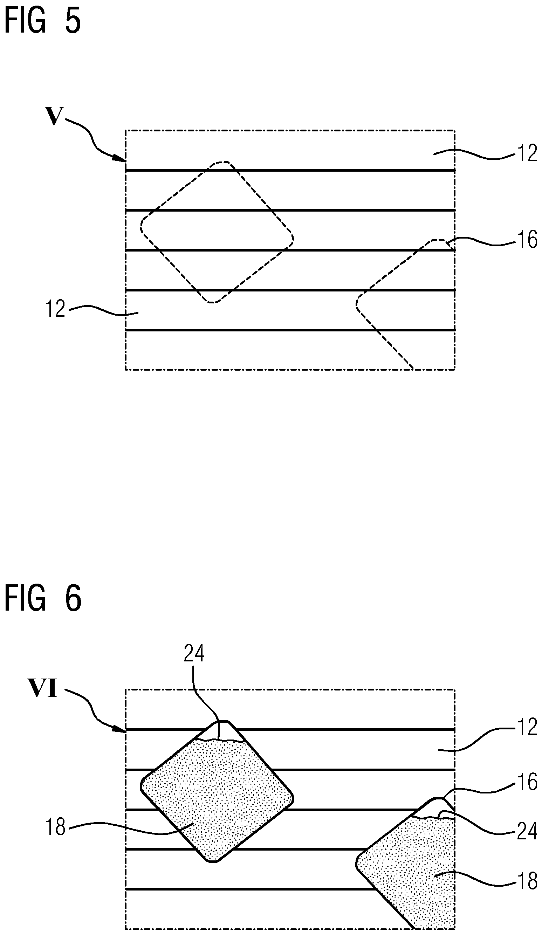

In den Figuren 5 und 6 ist jeweils ein Schnitt V und VI aus der Figur 3 dargestellt. Hier wird der schichtförmige Aufbau der Lagerbuche 2 vergrößert dargestellt. In Figur 5 ist dabei ein Blick von außen auf die Lagerbuchse 2 gezeigt, indem die Kavitäten 16 lediglich als gestrichelte Linien dargestellt sind. In Figur 6 ist der Schnitt VI aus Figur 3 gezeigt, der im Inneren der Wandstruktur 26 der Lagerbuchse 2 erfolgt, sodass in Figur 6 direkte Schnitte durch die Kavitäten 16 gezeigt sind. Es ist dabei von Vorteil, wenn die Kavitäten 16 so hoch wie möglich mit dem Pulver 18 gefüllt sind. Dabei ergibt sich ein Pulverfüllgrad 24, der in Figur 6 veranschaulicht ist. Die Linie 24 in Figur 6 zeigt an, wie hoch der Füllstand des Pulvers 18 in der Kavität 16 ist. Es ist dabei anzustreben, den Füllgrad 24 so hoch wie möglich zu gestalten. Der Pulverfüllgrad 24 sollte dabei bevorzugt mehr als 60 % betragen, in Figur 6 ist eine sehr vorteilhafte Ausgestaltungsform dargestellt, in der Pulverfüllgrad 24 bei ca. 95 % liegt.

Die beschriebene Lagerbuchse 2 bzw. das Dämpfungselement 32 dient in vorteilhafter Weise dazu, Schwingungen, die über die Rotorachse 4 in das Lagerschild 28 bzw. das Gehäuse 62 eingebracht werden, zu dämpfen. Hierbei werden jedoch mit dem schichtförmigen Aufbau sowie durch die mit Pulver gefüllten Kavitäten bei einer sehr geringen Wanddicke hohe Herausforderungen an die Herstellungstechnik der Lagerbuchse 2 gestellt. Ein geeignetes Herstellungsverfahren, das die hohen Ansprüche an die Lagerbuchs 2 ermöglicht, wird im Weiteren beschrieben.

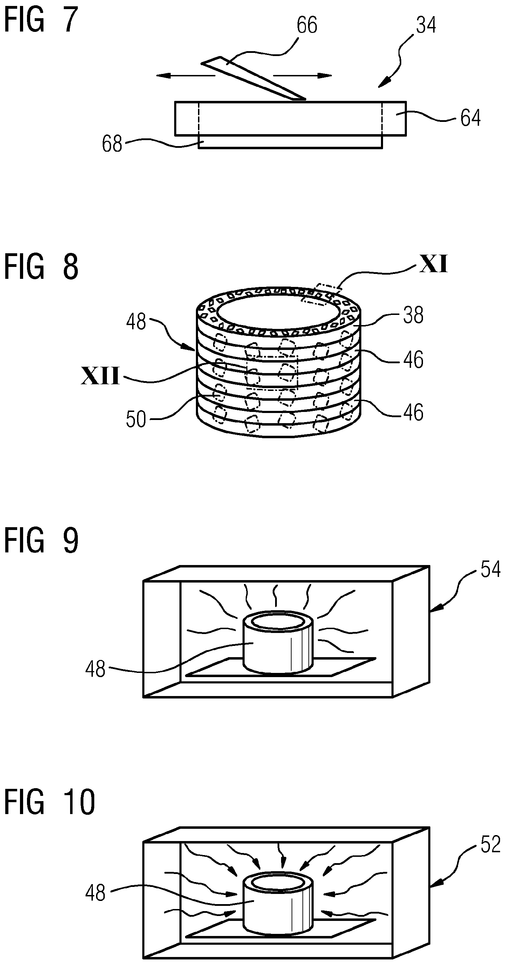

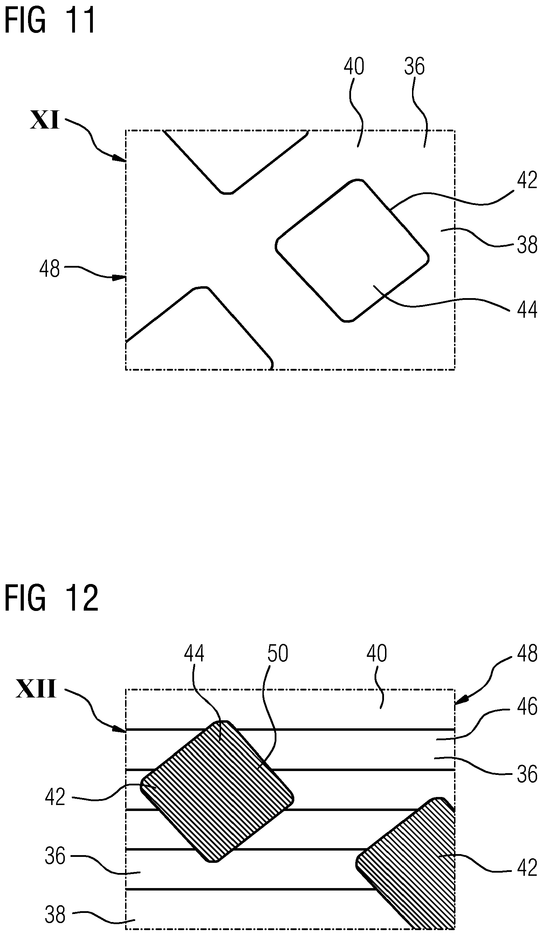

Dabei zeigt Figur 7 schematisch ein Siebdruckverfahren 34, wobei ein Rakel 66 über ein Sieb 64 gefahren wird. Dabei werden Siebdruckpasten 40, 44 (Darstellung in den Figuren 11 und 12) durch das Sieb 64 auf ein Substrat 68 bzw. auf bereits bestehende Schichten gedruckt.

Hierzu wird zunächst, wie in Figur 8 dargestellt, eine erste Schicht 38 erzeugt, auf die weitere Schichten 46 aufgedruckt werden, bis ein dreidimensionaler Grünkörper 48 entsteht. Der Grünkörper 48 umfasst dabei geschlossene Volumina 50, die nach Beendigung des Herstellungsprozesses den Kavitäten 16 der Lagerbuchse 2 entsprechen. Zur Erzeugung dieser Volumina 50 wird auf die Figuren 11 und 12 verwiesen, wobei die Figur 11 einen radialen Schnitt entlang der Linien XI in Figur 8 darstellt und analog dazu die Figur 12 einen axialen Schnitt entlang des gestrichelten Kastens XII in Figur 8 wiedergibt.

In Figur 11 ist somit die exemplarische (sich grundsätzlich nicht von den weiteren Schichten 46 unterscheidende) erste Schicht 38 abgebildet, die einen ersten Teilbereich 36 aufweist, der durch einen ersten Siebdruckschritt mit einer ersten Siebdruckpaste 40 erzeugt wird. In diesem ersten Siebdruckschritt wird ein zweiter Bereich 42 ausgespart. Dieser Bereich 42 wird erst in einem zweiten Siebdruckschritt mit einer zweiten Siebdruckpaste 44 erzeugt. Hierfür werden in der Regel zwei verschiedene Schablonen auf das Sieb gelegt, sodass die zweite Siebdruckpaste bei dem zweiten Schritt direkt in die Aussparung hinein gedruckt wird, die im ersten Schritt ausgespart wurde.

In der Figur 12 ist im Weiteren der schichtförmige Aufbau und somit eine Abfolge einer Mehrzahl von Schichten dargestellt, wobei auf die erste Schicht 38 weitere Schichten 46 im beschriebenen Verfahren aufgedruckt werden. Dabei ist es zweckmäßig, dass nach jedem Druckprozess ein kurzer Trocknungsprozess, beispielsweise unter einer UV-Lampe, erfolgt.

Ein derartiger Trocknungsprozess kann beispielsweise 5 Sekunden dauern. Wenn nach dem Trocknen des ersten Teilbereiches 36 und dem Drucken des zweiten Teilbereiches 42 ein weiterer Trocknungsschritt erfolgt, so kann eine Schicht in 15 - 20 Sekunden gedruckt werden. Bei einer üblichen Schichtdicke von 100 µm, kann 1 mm Höhe im Grünkörper 48 in ca. 200 Sekunden aufgebaut werden. Hierbei handelt es sich um die Schichtdicke, die beim Drucken aufgebracht wird. Diese unterscheidet sich von der Schichtdicke 14, die zur Lagerbuchse definiert wurde, wobei in der Regel mit einem Schwund bei einem Sinterungsprozess von 20 Vol. % zu rechnen ist. Die beschriebe Fertigungszeit stellt für ein additives Herstellungsverfahren eine überdurchschnittlich hohe Produktionsgeschwindigkeit dar.

Im Weiteren soll auf die Materialien zur Erzeugung des Grünkörpers 48 bzw. der Lagerbuchse 2 eingegangen werden. Es ist zweckmäßig, für die erste Siebdruckpaste ein Material zu verwenden, das auf Eisenbasis ausgestaltet ist. Dabei werden entsprechende Pulver des herzustellenden Materials, also beispielsweise ein Pulver einer Eisenlegierung, mit geeigneten organischen oder auch anorganischen Bindemitteln versehen, sodass eine rheologisch günstige Siebdruckpaste entsteht. Die erste Siebdruckpaste ist somit in vorteilhafter Weise mit Partikeln aus Eisenpulvern (in der Regle einer Eisenlegierung) versehen, sodass im Weiteren die Wandstruktur 26 der Lagerbuchse 2 im Wesentlichen auf Eisenbasis besteht. Die zweite Siebdruckpaste 44, die in die zweiten Teilbereiche 42 gedruckt wird, umfasst dabei einen funktionalen Anteil eines Materials, das auf der einen Seite eine hohe Dämpfungswirkung hat, also möglicherweise auch eine hohe Dichte aufweist, und dabei eine Sintertemperatur bzw. ein Schmelztemperatur aufweist, die höher liegt als die der verwendeten Eisenlegierung. Die Notwendigkeit hierfür wird noch im Weiteren bezüglich der Beschreibung von Figur 9 und Figur 10 erläutert. Die Sintertemperatur eines Materials liegt niedriger als die Schmelztemperatur, da beim Sintern kein Aufschmelzen des gesamten Materials bzw. des gesamten Partikels erfolgt. Vielmehr finden bei einem Sinterprozess in Grenzbereichen Diffusionsprozesse zwischen einzelnen Partikeln statt, gelegentlich kommt es auch zu lokalen Aufschmelzungen. Die Schmelztemperatur ist somit höher als die Sintertemperatur, jedoch korreliert in der Regel die Sintertemperatur mit der Schmelztemperatur, sodass ein Material mit einer höheren Sintertemperatur als ein anderes Material auch eine höhere Schmelztemperatur aufweisen wird. Als Material für die zweite Siebdruckpaste 44 eignen sich somit keramische Materialien mit einer hohen Dichte und einer hohen Sintertemperatur, jedoch auch Metalle mit einer hohen Schmelztemperatur und einer hohen Dichte wie z. B. Wolfram.

Der in Figur 8 beschriebene Grünkörper 48 wird nun einem Entbinderungsprozess 54 unterzogen, bei dem bevorzugt unter Ausschluss von Sauerstoff eine Reduktion des organischen Bindemittels erfolgt und Zersetzungsprozesse des Bindemittels kontinuierlich, beispielsweise durch Gasaustausch, aus der Atmosphäre entfernt werden. Eine typische Entbinderung erfolgt beispielsweise bei Temperaturen zwischen 200° C und 400° C. Im Weiteren erfolgt nun ein Wärmebehandlungsprozess 52, bei dem der Grünkörper 48 einem Sinterprozess unterzogen wird. Wie bereits beschrieben, liegt die Sintertemperatur unterhalb des Schmelzpunktes des zu sinternden Materials, bei einer Eisenlegierung können Sintertemperaturen zwischen 900 und 1.400° C zweckmäßig sein. Dabei folgt der Sinterprozess einer definierten Temperaturkurve, die genau auf die entsprechende Metalllegierung abgestimmt ist. Der Wärmebehandlungsprozess 52 erfolgt dabei bevorzugt in Inertgasatmosphäre.

Nach dem in Figur 10 dargestellten Wärmebehandlungsprozess 52 wird der ehemalige Grünkörper 48 nicht mehr als solcher bezeichnet, vielmehr handelt es sich dabei jetzt um die Lagerbuchse 2 bzw. eine noch zu bearbeitende Vorform der Lagerbuchse 2. Eine derartig dargestellte Lagerbuchse 2 wird nun beispielsweise in ein Druckgusswerkzeug eingesetzt und wird in einem Druckgussprozess mit Aluminium umgossen, sodass das bereits erwähnte Lagerschild 28 die Lagerbuchse stoffschlüssig umgibt.

### Bezugszeichenliste

- 2: Lagerbuchse
- 4: rotierende Welle
- 6: Wand der Lagerbuchse
- 8: Wandstärke
- 10: Durchmesser Lagerbuchse
- 12: Schichten
- 14: Schichtdicke
- 16: Kavitäten
- 18: Pulver
- 20: axiale Richtung
- 21: radiale Richtung
- 22: Querschnitt Kavität
- 24: Pulverfüllgrad
- 26: Wandstruktur
- 28: Lagerschild
- 30: Elektromotor
- 32: Dämpfungselement
- 34: Siebdruckverfahren
- 36: erster Teilbereich
- 38: erste Schicht
- 40: erste Siebdruckpaste
- 42: zweiter Teilbereich
- 44: zweite Siebdruckpaste
- 46: weitere Schichten
- 48: Grünkörper
- 50: Volumen
- 52: Wärmebehandlungsprozess
- 54: Entbinderungsprozess
- 58: Rotor
- 60: Stator
- 62: Gehäuse
- 64: Sieb
- 66: Rakel
- 68: Substrat

## Patentansprüche

1. Lagerbuchse für eine rotierende Welle (4), wobei eine Wand (6) der Lagerbuchse (2) eine Wandstärke (8) aufweist, die weniger als 10 % des Durchmessers (10) der Lagerbuchse (2) beträgt, **dadurch gekennzeichnet, dass** die Lagerbuchse (2) ein Dämpfungselement ist, das in axialer Richtung (20) aus einer Mehrzahl von stoffschlüssig verbundenen Schichten (12) aufgebaut ist, die jeweils eine Schichtdicke (14) aufweisen, die zwischen 10 µm und 200 µm liegt und die Wand (6) geschlossene Kavitäten (16) aufweist, die mit einem Pulver (18) gefüllt sind.

2. Lagerbuchse nach Anspruch 1, **dadurch gekennzeichnet, dass** die Lagerbuchse (2) Kavitäten (16) aufweist, die einen maximalen Querschnitt (22) aufweisen, der kleiner als 5 mm² ist.

3. Lagerbuchse nach Anspruch 2, **dadurch gekennzeichnet, dass** die Lagerbuchse (2) Kavitäten (16) aufweist, die einen maximalen Querschnitt (22) aufweisen, der kleiner als 3 mm² ist.

4. Lagerbuchse nach einem der Ansprüche 1 bis 3, **dadurch gekennzeichnet, dass** ein Pulverfüllgrad (24) der Kavitäten (16) mindestens 60 % beträgt.

5. Lagerbuchse nach Anspruch 4, **dadurch gekennzeichnet, dass** ein Pulverfüllgrad (24) der Kavitäten (16) mindestens 80 % beträgt.

6. Lagebuchse nach einem der vorhergehenden Ansprüche, **dadurch gekennzeichnet, dass** eine Wandstruktur (26) der Lagebuchse (2) aus einer Metalllegierung gebildet ist.

7. Lagerbuchse nach Anspruch 6, **dadurch gekennzeichnet, dass** die Metalllegierung eine Eisenlegierung ist.

8. Lagerbuchse nach einem der vorhergehenden Ansprüche, **dadurch gekennzeichnet, dass** das Pulver (18) in den Kavitäten (16) ein Material umfasst, das eine höhere Schmelztemperatur aufweist als das Material der Wandstruktur (26).

9. Lagerbuchse nach Anspruch 8, **dadurch gekennzeichnet, dass** das Pulver (18) in den Kavitäten (16) ein Material umfasst, das eine höhere Dichte aufweist als das Material der Wandstruktur (26).

10. Lagerschild umfassend eine Lagerbuchse (2) nach einem der Ansprüche 1 bis 9.

11. Elektromotor mit einem Lagerschild (28) nach Anspruch 10.

12. Verfahren zur Herstellung eines Dämpfungselementes (32) mittels eines Siebdruckverfahrens (34) umfassend folgende Schritte:
- Drucken eines ersten Teilbereiches (36) einer ersten Schicht (38) mit einer ersten Siebdruckpaste (40),
- Drucken eines zweiten Teilbereichs (42) der ersten Schicht (38) mit einer zweiten Siebdruckpaste (44),
- wobei der zweite Teilbereich (42) in der Schichtebene vom ersten Teilbereich (36) umschlossen wird
- Trocknen der ersten Schicht (38),
- Fortführen des Druckens von weiteren Schichten (46) bis zur Ausbildung eines dreidimensionalen Grünkörpers (48), in dem die zweiten Teilbereiche 42 der Schichten (38, 46) eine von den ersten Teilbereichen (36) umschlossenes Volumen (50) ausbilden,
- Durchführung eines Wärmebehandlungsprozess (52) bei einer Prozesstemperatur, die einen Sintervorgang eines Materials der ersten Siebdruckpaste (40) bewirkt und bei der bei dem Material der zweiten Siebdruckpaste (44) der Sintervorgang bei der Prozesstemperatur im Wesentlichen ausbleibt.

13. Verfahren nach Anspruch 12, **dadurch gekennzeichnet, dass** die erste Siebdruckpaste (40) ein Material auf Eisenbasis enthält.

14. Verfahren nach einem der Ansprüche 12 oder 13, **dadurch gekennzeichnet, dass** vor dem Wärmebehandlungsprozess (52) ein Entbinderungsprozess (54) erfolgt.

15. Verfahren nach einem der Ansprüche 12 bis 14, **dadurch gekennzeichnet, dass** das Dämpfungselement (32) eine Lagerbuchse (2) ist.

## Claims

1. Bearing bush for a rotating shaft (4), wherein a wall (6) of the bearing bush (2) has a wall thickness (8), which amounts to less than 10 % of the diameter (10) of the bearing bush (2), **characterised in that** in the axial direction (20) the bearing bush (2) is a damping element made from a plurality of layers (12) connected with a material bond, each of which has a layer thickness (14), which lies between 10 µm and 200 µm and the wall (6) has closed cavities (16) which are filled with a powder (18).

2. Bearing bush according to claim 1, **characterised in that** the bearing bush (2) has cavities (16), which have a maximum cross-section (22) which is less than 5 mm².

3. Bearing bush according to claim 2, **characterised in that** the bearing bush (2) has cavities (16), which have a maximum cross-section (22) which is less than 3 mm².

4. Bearing bush according to one of claims 1 to 3, **characterised in that** a powder fill level (24) of the cavities (16) amounts to at least 60 %.

5. Bearing bush according to claim 4, **characterised in that** a powder fill level (24) of the cavities (16) amounts to at least 80 %.

6. Bearing bush according to one of the preceding claims, **characterised in that** a wall structure (26) of the bearing bush (2) is formed from a metal alloy.

7. Bearing bush according to claim 6, **characterised in that** the metal alloy is an iron alloy.

8. Bearing bush according to one of the preceding claims, **characterised in that** the powder (18) in the cavities (16) comprises a material which has a higher melting temperature than the material of the wall structure (26).

9. Bearing bush according to claim 8, **characterised in that** the powder (18) in the cavities (16) comprises a material which has a higher density than the material of the wall structure (26).

10. Bearing shield comprising a bearing bush (2) according to one of claims 1 to 9.

11. Electric motor with a bearing shield (28) according to claim 10.

12. Method for manufacturing a damping element (32) by means of a screen-printing method (34) comprising the following steps:
- printing a first subregion (36) of a first layer (38) with a first screen printing paste (40),
- printing a second subregion (42) of the first layer (38) with a second screen printing paste (44),
- wherein the second subregion (42) in the layer plane is enclosed by the first subregion (36)
- drying the first layer (38),
- continuing the printing of further layers (46) until a three-dimensional green body (48) is formed, in which the second subregions (42) of the layers (38, 46) form a volume (50) enclosed by the first subregions (36),
- carrying out a thermal treatment process (52) at a process temperature, which brings about a sintering process of a material of the first screen printing paste (40) and with which, with the material of the second screen printing paste (44), the sintering process essentially remains absent at the process temperature.

13. Method according to claim 12, **characterised in that** the first screen printing paste (40) contains a material based on iron.

14. Method according to one of claims 12 to 13, **characterised in that** a debinding process (54) is carried out before the thermal treatment process (52).

15. Method according to one of claims 12 to 14, **characterised in that** the damping element (32) is a bearing bush (2).

## Revendications

1. Coussinet de palier pour un arbre (4) rotatif, dans lequel une paroi (6) du coussinet (2) de palier a une épaisseur (8) de paroi, qui représente moins de 10 % du diamètre (10) du coussinet (2) de palier, **caractérisé en ce que** le coussinet (2) de palier est un élément d'amortissement, qui est constitué, dans la direction (20) axiale, d'une pluralité de couches (12) reliées à coopération de matière, qui ont chacune une épaisseur (14) de couche comprise entre 10 µm et 200 µm et la paroi (6) a des cavités (16) fermées, qui sont emplies d'une poudre (18).

2. Coussinet de palier suivant la revendication 1, **caractérisé en ce que** le coussinet (2) de palier a des cavités (16), qui ont une section (22) transversale maximum plus petite que 5 mm².

3. Coussinet de palier suivant la revendication 2, **caractérisé en ce que** le coussinet (2) de palier a des cavités (16), qui ont une section (22) transversale maximum plus petite que 3 mm².

4. Coussinet de palier suivant l'une des revendications 1 à 3, **caractérisé en ce qu'**un degré (24) de remplissage des cavités (16) par de la poudre est d'au moins 60 %.

5. Coussinet de palier suivant la revendication 4, **caractérisé en ce que** le degré (24) de remplissage des cavités (16) par de la poudre est d'au moins 80 %.

6. Coussinet de palier suivant l'une des revendications précédentes, **caractérisé en ce qu'**une structure (26) de paroi du coussinet (2) de palier est en un alliage métallique.

7. Coussinet de palier suivant la revendication 6, **caractérisé en ce que** l'alliage métallique est un alliage de fer.

8. Coussinet de palier suivant l'une des revendications précédentes, **caractérisé en ce que** la poudre (18) dans les cavités (16) comprend un matériau, qui a un point de fusion plus haut que le matériau de la structure (26) de paroi.

9. Coussinet de palier suivant la revendication 8, **caractérisé en ce que** la poudre (18) dans les cavités (16) comprend un matériau, qui a une masse volumique plus grande que le matériau de la structure (26) de paroi.

10. Flasque comprenant un coussinet (2) de palier suivant l'une des revendications 1 à 9.

11. Moteur électrique comprenant un flasque (28) suivant la revendication 10.

12. Procédé de fabrication d'un élément (32) d'amortissement au moyen d'un procédé (34) de sérigraphie comprenant les stades suivants :
- impression d'une première région (36) partielle d'une première couche (38) par une première pâte (40) de sérigraphie,
- impression d'une deuxième région (42) partielle de la première couche (38) par une deuxième pâte (44) de sérigraphie,
- dans lequel la deuxième région (42) partielle est, dans le plan de couche, enfermée par première région (36) partielle,
- séchage de la première couche (38),
- poursuite de l'impression d'autres couches (46), jusqu'à la formation d'un corps (48) à vert en trois dimensions, dans lequel les deuxièmes régions (42) partielles des couches (38, 46) forment un volume (50) enfermé par les premières régions (36) partielles,
- on effectue une opération (52) de traitement par la chaleur à une température de traitement, qui provoque un frittage d'un matériau de la première pâte (40) de sérigraphie, et dans lequel, dans le matériau de la deuxième pâte (44) de sérigraphie, le frittage est sensiblement absent à la température de l'opération.

13. Procédé suivant la revendication 12, **caractérisé en ce que** la première pâte (40) de sérigraphie contient un matériau à base de fer.

14. Procédé suivant l'une des revendications 12 ou 13, **caractérisé en ce qu'**avant l'opération (52) de traitement à la chaleur, on effectue une opération (54) de déliaison.

15. Procédé suivant l'une des revendications 12 à 14, **caractérisé en ce que** l'élément (32) d'amortissement est un coussinet (2) de palier.
